# EUROPÄISCHE PATENTSCHRIFT

(11) **EP 0 616 823 B1**
(45) Veröffentlichungstag und Bekanntmachung des Hinweises auf die Patenterteilung: **10.06.1998**
(21) Anmeldenummer: 94103858.0
(22) Anmeldetag: 14.03.1994
(51) Int. Cl.: B01D 17/02, E03F 5/16

(54) **Abscheider zum Trennen von Flüssigkeitsgemischen**
Separator for separating mixtures of liquids
Séparateur pour séparer des mélanges de liquides

(30) Priorität: 19.03.1993 DE 4308841
(43) Veröffentlichungstag der Anmeldung: 28.09.1994
(73) Patentinhaber: BETONWERK NEETZE GmbH & Co. KG, D-21398 Neetze (DE)
(72) Erfinder: Victor, Heinz, Dipl.-Ing., D-21481 Lauenburg (Elbe) (DE); Coerdt, Roland, Dipl.-Ing., D-21398 Neetze (DE)
(74) Vertreter: Eisenführ, Speiser & Partner

(56) Entgegenhaltungen:
- EP-A- 0 118 021
- EP-A- 0 522 265
- DE-U- 8 804 317
- GB-A- 2 019 238

## Beschreibung

Die Erfindung betrifft einen Abscheider zum Trennen von Flüssigkeitsgemischen, insbesondere zum Abscheiden von Leichtflüssigkeiten aus Wasser, bestehend aus einem Becken mit einem Einlauf, von dem aus der Flüssigkeitsstrom vom Beckenrand her abwärts gerichtet eingeleitet wird, mit einem sich anschließenden Abscheidebereich, in dem der Flüssigkeitsstrom durch eine senkrecht stehende Trennwandanordnung umgelenkt wird, und mit einem zu einem Klarwasserablauf führenden Auslaufkasten, der über eine Zuflußöffnung in einer unteren Sockelplatte mit dem Abscheidebereich in Verbindung steht.

Abscheider dieser Art werden verwendet, um mit Leichtflüssigkeiten verunreinigtes Abwasser von diesen Bestandteilen zu befreien, bevor diese in eine Kanalisation eingeleitet werden. Solche Leichtflüssigkeitsabscheider sind üblicherweise als Schwerkraftabscheider oder als Koaleszenzabscheider ausgebildet.

Aus DE-A1-41 22 902 (entspricht EP-A-522 265) oder DE GM 91 05 210 ist bereits ein solcher Flüssigkeitsabscheider bekannt, der die vorstehend angegebenen Merkmale aufweist. Die hierin verwendete Trennwandanordnung ist in Form einer C-förmigen Anordnung aus polygonal zusammengesetzten Platten gebildet, die den Innenraum des Beckens in Form eines symmetrischen Labyrinths in einen inneren und einen äußeren Raum unterteilen. Der vom Einlauf kommende Flüssigkeitsstrom teilt sich an der C-förmigen Trennwandanordnung und fließt von beiden Seiten um diese herum und trifft im inneren Raum wieder aufeinander, um dann den Abscheider über die Zuflußöffnung in der unteren Sockelplatte des Auslaufkastens wieder zu verlassen.

Die Strömungsverhältnisse in diesem bekannten Abscheider sind jedoch verhältnismäßig unbefriedigend, insbesondere weil sich starke Verwirbelungen bilden, die den Abscheidevorgang beeinträchtigen, und darüber hinaus ist die Trennwandanordnung verhältnismäßig aufwendig sowohl in der Herstellung als auch in der Befestigung im Becken.

Aus der GB-A-2 019 238 ist ein Flüssigkeitsabscheider bekannt, der eine kreisförmige Grundfläche hat. Abwechselnd von einander gegenüberliegenden Seiten in den Raum ragende Trennwände führen zu einer mäanderförmigen Strömung.

Aus der DE-U-88 04 317 ist ein Koaleszenzabscheider bekannt, der eine kreisförmige Grundfläche hat. Von einem Einlauf strömt die Flüssigkeit in beide Richtungen in den kreisförmigen Raum um einen Filtereinsatz herum und verläßt auf der gegenüberliegenden Seite den Abscheider über einen Auslaß.

Der vorliegenden Erfindung liegt die Aufgabe zugrunde, einen Abscheider der eingangs genannten Art vorzuschlagen, bei dem die Strömungsverhältnisse zur intensiven Abscheidung optimiert sind und eine besonders einfache und höchst wirksame Trennwandanordnung vorgesehen ist.

Diese Aufgabe wird gemäß der vorliegenden Erfindung durch einen Abscheider der eingangs genannten Bauart gelöst, der dadurch gekennzeichnet ist, daß der Einlauf als ein den Flüssigkeitsstrom abwärts und nach einer Seite lenkender Einlauf ausgebildet ist, dem sich eine Trennwandanordnung mit zueinander gestaffelten, quer zur Einlaufrichtung angeordneten Trennwänden in Form eines Labyrinths zum Einleiten des Flüssigkeitsstromes in eine mäanderförmige, gleichförmige Strömung anschließt, daß der Ausgang des Labyrinths derart zum Beckenrand gerichtet in einen etwa kreis- oder ellipsenförmig ausgebildeten Abscheidebereich übergeht, daß sich eine in nur einer Richtung spiralförmige Bewegung des Flüssigkeitsstromes um die Zuflußöffnung des Auslaufkastens ergibt, und daß der Strömungsquerschnitt vom Einlauf über das Labyrinth und den Abscheidebereich bis in die Zuflußöffnung des Auslaufkastens weitgehend gleichförmig ausgebildet und das Innere des Abscheidebereiches im wesentlichen frei von die spiralförmige Bewegung störenden Teilen ist.

Bei einem solchen Abscheider mit der erfindungsgemäßen Trennwandanordnung ergibt sich aufgrund der langen Strömungswege und des sich anschließenden, in einer Richtung spiralförmigen Flüssigkeitsstromes des zu trennenden Flüssigkeitsgemisches eine besonders gute Abscheiderwirkung, insbesondere dadurch, daß sich aufgrund des im wesentlichen gleichförmigen Querschnitts und wegen der fehlenden Verwirbelungen eine sehr gleichmäßige Strömung ohne nennenswerte Strömungsgeschwindigkeitsänderungen ergibt.

Die erfindungsgemäße Trennwandanordnung ist so wirksam, daß sich eine besonders einfachere Ausführungsform in der Weise ergibt, daß die Trennwandanordnung nur aus zwei bis zum Beckenboden reichenden Trennwänden besteht, von denen jeweils entgegengesetzte Seitenkanten zum Beckenrand auf gegenüberliegenden Seiten hin abschließen. Diese Trennwandanordnung genügt bereits, den Flüssigkeitsstrom etwa tangential am Beckenrand in den sich anschließenden Abscheidebereich einzuleiten, wodurch eine wirksame spiralförmige Strömung in einer Richtung erreicht wird.

Um diese spiralförmige Bewegung des Flüssigkeitsstromes möglichst störungsfrei zu halten, ist gemäß einer vorteilhaften Ausführungsform mit zylindrischem Becken der Auslaufkasten im oberen und mittleren Bereich mit einer dem Einlauf und der Trennwand gegenüberliegenden glatten Abschlußwand versehen, die etwa in der Form einer Kreissehne im Querschnitt des zylindrischen Beckens angeordnet ist. Diese Ausbildung ermöglicht ein wirbelfreies Entlangströmen des spiralförmigen Flüssigkeitsstromes.

Ein besonders einfacher Aufbau der Trennwandanordnung ist dadurch gekennzeichnet, daß die Trennwände durch Verbindungsmittel zu einer Einheit miteinander verbunden sind, und daß die zum Beckenrand abschließenden Seitenkanten der Trennwände in U-förmige Halterungsschienen eingeschoben sind, die am Beckenrand befestigt sind. Hierdurch ist es möglich, beim Installieren des Abscheiders auf der Baustelle die Halterung für die Trennwandanordnung vor dem Einbau zu montieren, was aufgrund des größeren zur Verfügung stehenden Platzes wesentlich einfacher ist. Die Trennwandanordnung kann dann nach Montage der Halterungsschienen auf einfache Weise von oben her eingeschoben werden. Die U-förmigen Halterungsschienen sind im Falle eines Beckens aus Beton am Beckenrand eingedübelt, während bei einem mit Edelstahl ausgekleideten Becken die Halterungsschienen am Beckenrand schon vorher angeschweißt sein können. Diese Konstruktion hat darüber hinaus den Vorteil, daß die Trennwandanordnung zum Reinigen leicht entfernt und wieder eingebaut werden können.

Die erfindungsgemäße Ausbildung des Abscheiders mit einer einfachen und platzsparenden Trennwandanordnung hat darüber hinaus den Vorteil, daß der Abscheidebereich vom Raum her auf einfache Weise mit Zusatzausstattungen ausgestattet werden kann. So kann der Abscheider auf einfache Weise als Koaleszenzabscheider ausgebildet sein, wobei ein zylindrisch geformter Filterkörper im Bereich der Zuflußöffnung des Auslaufkastens auf der Sockelplatte gehaltert ist. Auf diese Weise kann der Abscheider bei gleicher Bauart entweder als einfacher Schwerkraftabscheider ausgebildet oder jederzeit durch Einsetzen des Filterkörpers zu einem Koaleszenzabscheider ausgerüstet werden. Im letzteren Fall wird der durch die erfindungsgemäß vorgesehene Trennwandanordnung eingeleitete, in einer Richtung spiralförmige Flüssigkeitsstrom besonders wirksam um den Umfang des zylindrischen Filterkörpers geleitet und durchsetzt diesen besonders gleichmäßig.

Während bei kleineren Abscheidergrößen eine zylindrische Beckenform sinnvoll ist, so wird man Abscheider mit größeren Maßen quaderförmig, ggf. mit abgerundeten Ecken ausbilden, damit solche Becken als Fertigteile nicht zu große Transportmaße in Breitenrichtung annehmen. Bei einer vorteilhaften Ausführungsform mit einem Becken als aufrecht stehender Quader mit längeren Längswänden und kürzeren Breitenwänden der Grundfläche sind der Einlauf- und der Auslaufkasten zweckmäßigerweise an den sich gegenüberliegenden Breitenwänden angeordnet, so daß sich der etwa kreis- oder ellipsenförmige Abscheidebereich im Anschluß an die Trennwandanordnung auf einfache Weise durch Abschrägen der Ecken erzielen läßt.

In einem solchen Fall weist der Auslaufkasten vorzugsweise im oberen und unteren Bereich eine dem Einlauf und der Trennwandanordnung gegenüberliegende glatte Abschlußwand auf, die parallel zur Breitenwand verläuft und mit zum Abscheideraum geneigten Seitenwänden zur Strömungsverbesserung versehen ist. Darüber hinaus sind die Trennwände der Trennwandanordnung zweckmäßigerweise in ihrem am Beckenrand liegenden Bereich mit unter 45° verlaufenden Seitenwänden zur Strömungsverbesserung versehen.

Weitere vorteilhafte Ausgestaltungen der Erfindung sind den Unteransprüchen zu entnehmen.

Die Erfindung wird nachfolgend anhand von Ausführungsbeispielen unter Bezug auf die beigefügten Zeichnungen näher erläutert.

Es zeigen:
- Figur 1: eine Draufsicht auf eine erste Ausführungsform eines Abscheiders nach dem Schwerkraftprinzip;
- Figur 2: einen Schnitt entsprechend der Linie II-II durch den Abscheider nach Figur 1;
- Figur 3: eine Draufsicht auf eine zweite Ausführungsform eines Abscheiders in der Form eines Koaleszenzabscheiders;
- Figur 4: einen Schnitt entlang der Linie IV-IV durch den Abscheider nach Figur 3; und
- Figur 5: eine Draufsicht auf eine dritte Ausführungsform.

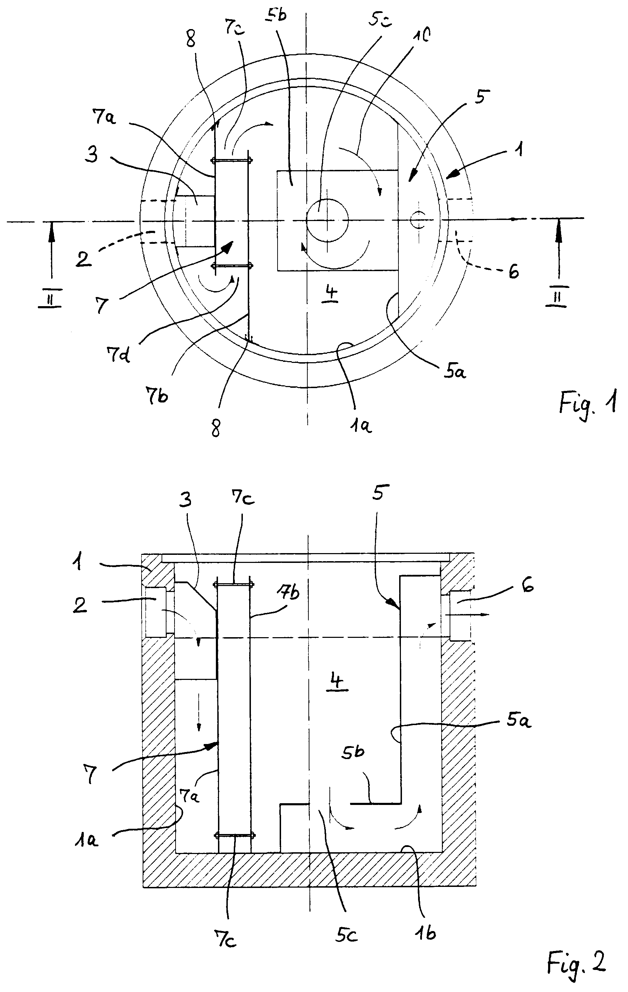

Der in den Figuren 1 und 2 dargestellte Flüssigkeitsabscheider weist ein Becken 1 mit kreisrundem Querschnitt auf. Am Beckenrand 1 a ist im oberen Abschnitt ein Einlauf 2 angeordnet, dem sich ein Einlaufkasten 3 anschließt. Am Beckenrand 1a gegenüber befindet sich ein Auslaufkasten 5, der eine senkrechte Abschlußwand 5a und eine untere Sockelplatte 5b aufweist. An den Auslaufkasten 5 ist ein Klarwasserauslauf 6 angeschlossen. Zwischen dem Einlaufkasten 3 und dem Auslaufkasten 5 befindet sich ein Abscheidebereich 4, und sowohl der Einlauf 2 als auch der Klarwasserauslauf 6 liegen etwa auf gleicher Höhe.

An den Einlaufkasten 3 anschließend ist eine Trennwandanordnung 7 vorgesehen, die im vorliegenden Beispiel aus zwei zueinander gestaffelt angeordneten Trennwänden 7a und 7b besteht. Die Seitenkante der ersten Trennwand 7a schließt an den Beckenrand 1a an, während die Seitenkante der zweiten Trennwand 7b auf der gegenüberliegenden Seite am Beckenrand 1a anschließt, so daß sich ein Labyrinth ergibt, durch das der Flüssigkeitsstrom vom Einlaufkasten 3 her umgeleitet wird. Die Trennwände 7a und 7b reichen bis zum Beckenboden 1b.

Der Flüssigkeitsstrom fließt also vom Einlauf 2 durch den Einlaufkasten 3 nach unten (Figur 2) und gelangt zum Eingang 7d der Trennwandanordnung 7. Durch einen Ausgang 7e verläßt der Flüssigkeitsstrom die Trennwandanordnung 7 und strömt in Richtung der angedeuteten Pfeile 10 etwa tangential in das Becken und fließt in einer Richtung spiralförmig in den Abscheidebereich 4. Diese spiralförmige Bewegung weitgehend ohne Verwirbelungen sorgt für ein verhältnismäßig langes Verweilen im Abscheidebereich 4, und das von Leichtflüssigkeiten befreite Klarwasser verläßt den Abscheidebereich 4 über eine in der unteren Sockelplatte 5b des Auslaufkastens 5 angeordnete Zulauföffnung 5c, um anschließend zum Klarwasserauslauf 6 zu gelangen.

Diese spiralförmige Bewegung des Flüssigkeitsstromes im Abscheidebereich 4 des Beckens 1 erfolgt im wesentlichen ohne Wirbel, weil der Strömungsquerschnitt vom Einlauf 2 über die Trennwandanordnung 7 bis zum Auslaufkasten 5 weitgehend gleichförmig und der Abscheidebereich 4 des Beckens 1 im wesentlichen frei von die spiralförmige Bewegung störenden Teilen ist. So ist die senkrechte Abschlußwand 5a des Auslaufkastens 5 etwa in der Form einer Sehne des Querschnittes des zylindrischen Beckens ausgebildet, also ohne die spiralförmige Bewegung störende Vorsprünge oder Absätze.

Die Trennwandanordnung 7 besteht im vorliegenden Beispiel aus zwei durch Verbindungsmittel 7c im Abstand verbundene Trennwände 7b, die zweckmäßigerweise aus Edelstahlblechen bestehen. Als Verbindungsmittel sind vorzugsweise Distanzelemente eingesetzt, die auf beiden Seiten Verschraubungen aufweisen. Um die Trennwandanordnung 7 auf einfache Weise bei der Montage in das Becken 1 einzusetzen oder evtl. auch zwecks Reinigung oder dergleichen entfernen zu können, sind am Beckenrand 1a Halterungsschienen 8 mit zweckmäßigerweise Uförmigem Querschnitt vorgesehen, in die die Seitenkanten der Trennwände 7a und 7b auf einfache Weise von oben her eingeschoben werden können. Die Montage der Halterungsschienen 8 kann vor dem Einsetzen der Trennwandanordnung 7 erfolgen, so daß sich hierbei keine Raumprobleme ergeben. Im Falle eines Betonbeckens können die Halterungsschienen 8 am Beckenrand 1a verdübelt werden, während bei einem mit einem Edelstahltopf ausgekleideten Becken 1 die Halterungsschienen 8 angeschweißt werden können.

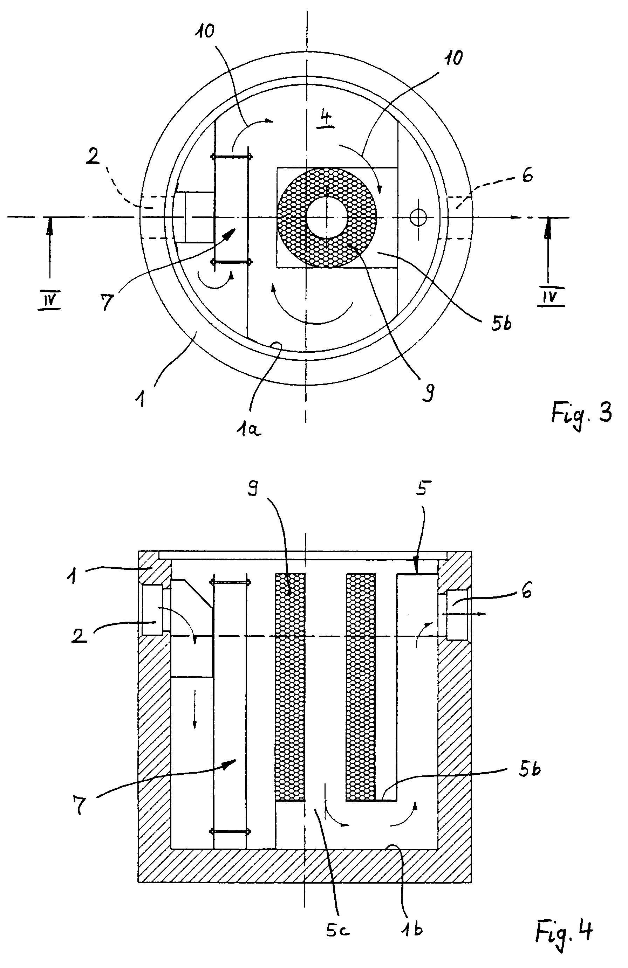

In den Figuren 3 und 4 ist nun eine zweite Ausführungsform des erfindungsgemäßen Abscheiders gezeigt, die sich von der ersten Ausführungsform nur dadurch unterscheidet, daß zusätzlich noch ein zylindrischer Filterkörper 9 eingesetzt ist, um den Abscheider zu einem Koaleszenzabscheider zu machen. Durch die einfache und platzsparende Ausbildung der Trennwandanordnung 7 kann der Filterkörper 9 auf einfache Weise auf die untere Sockelplatte 5b des Auslaufkastens 5 aufgesetzt und dort durch entsprechende Mittel gehaltert werden. Durch die spiralförmige Bewegung des Flüssigkeitsstroms im Abscheidebereich 4 ergibt sich eine besonders gleichmäßige Verteilung des Flüssigkeitsstroms auf die äußere Umfangsfläche des Filterkörpers 9, so daß eine sehr wirksame Durchdringung des Filterkörpers erfolgt. Es ist klar ersichtlich, daß für beide Arten von Abscheidern, nämlich dem reinen Schwerkraftabscheider und dem Koaleszenzabscheider mit zusätzlichem Filterkörper 9, im wesentlichen die gleichen Teile des erfindungsgemäßen Abscheiders verwendet werden können, was die Herstellung verbilligt, die Lagerhaltung vereinfacht und eine Umstellung jederzeit ermöglicht.

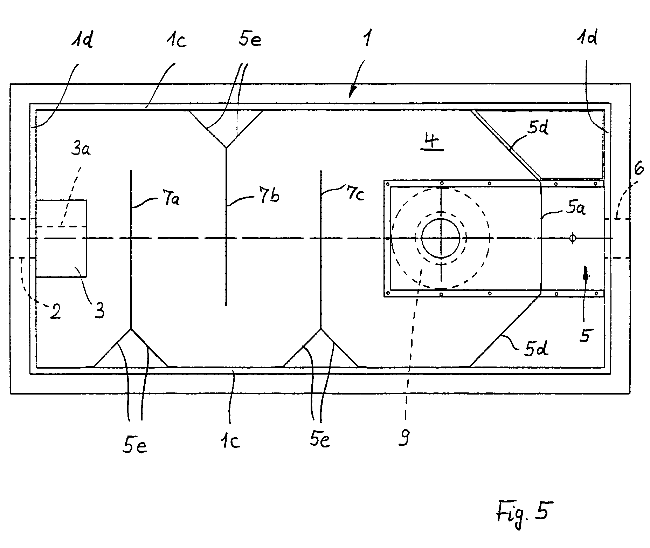

Figur 5 zeigt die Draufsicht auf eine weitere Ausführungsform, die sich von den ersten beiden Ausführungsformen nur dadurch unterscheidet, daß das Becken 1 nicht zylindrisch, sondern quaderförmig ausgebildet ist. Die Grundfläche des Beckenbodens weist längere Längswände 1c und kürzere Breitenwände 1d auf. Der Einlaufkasten 3 mit dem Einlauf 2 sowie der Auslaufkasten mit dem Klarwasserauslaß 6 sind an den sich gegenüberliegenden Breitenwänden 1d angeordnet. Der Einlaufkasten 3 ist zur Erzielung einer abwärts und zur Seite gerichteten Strömung mit einer Leitnase 3a versehen, wie sie auch für die beiden erstgenannten Ausführungsformen mit zylindrischem Becken zweckmäßig ist. Dem Einlaufkasten 3 schließt sich eine Trennwandanordnung mit im vorliegenden Fall drei zueinander gestaffelten Trennwänden 7a, 7b und 7c an, und im verbleibenden Abscheidebereich 4 wird wie bei den ersten beiden Ausführungsbeispielen eine spiralförmige Strömung erzeugt. Im Abscheidebereich 4 kann ebenfalls ein Filterkörper 9 angeordnet sein, um aus einem reinen Schwerkraftabscheider einen Koaleszenzabscheider zu machen.

Auch im dritten Ausführungsbeispiel nach Figur 5 ist eine senkrecht stehende Abschlußwand 5a vorgesehen, an die sich zur Strömungsverbesserung zwei Seitenwände 5d unter einem Winkel 45° anschließen. Die Trennwände 7a, 7b und 7c sind im Befestigungsbereich an den Längswänden 1c des Beckens 1 auch mit den Strömungsverlauf verbessernden Seitenwänden 5e ausgestattet, um Verwirbelungen in zu scharfen Ecken zu vermeiden.

Die in Figur 5 dargestellte Ausführungsform mit quaderförmigem Becken 1 bietet sich insbesondere bei größeren Abscheidern an, um die Außenmaße der als Fertigteile hergestellten Becken für den Transport in vernünftigen Grenzen zu halten. Auch bei dieser Form werden die gleichen Wirkungen wie bei den ersten beiden Ausführungsformen erzielt, d.h., der Strömungsquerschnitt über den gesamten Abscheider ist weitgehend gleichförmig, und der Abscheidebereich 4 hat eine für eine spiralförmige Strömung günstige Form. Denkbar wäre natürlich auch ein Abscheider mit ellipsenförmiger Grundfläche, um die Außenmaße für den Transport günstig zu gestalten.

Aus Gründen der Vereinfachung wurde bei der Darstellung und Beschreibung aller Ausführungsformen die normalerweise bei Schwerkraftabscheidern vorhandene Schwimmersteuerung fortgelassen, die normalerweise dafür sorgt, daß die sich auf der Oberfläche sammelnde Leichtflüssigkeit bei Überschreitung der zulässigen Speichermenge nicht zum Abfluß gelangt. Eine solche Schwimmersteuerung läßt sich selbstverständlich im Bereich der Zulauföffnung 5c des Auslaufkastens 5 vorsehen.

## Patentansprüche

1. Abscheider zum Trennen von Flüssigkeitsgemischen, insbesondere zum Abscheiden von Leichtflüssigkeiten aus Wasser, bestehend aus einem Becken mit einem Einlauf (2), von dem aus der Flüssigkeitsstrom vom Beckenrand her abwärts gerichtet eingeleitet wird, mit einem sich anschließenden Abscheidebereich (4), in dem der Flüssigkeitsstrom durch eine senkrecht stehende Trennwandanordnung umgelenkt wird, und mit einem zu einem Klarwasserablauf führenden Auslaufkasten (5), der über eine Zuflußöffnung (5c) in einer unteren Sockelplatte (5b) mit dem Abscheidebereich (4) in Verbindung steht,
dadurch gekennzeichnet, daß
der Einlauf als ein den Flüssigkeitsstrom abwärts und nach einer Seite lenkender Einlauf (2) ausgebildet ist, dem sich eine Trennwandanordnung (7) mit zueinander gestaffelten, quer zur Einlaufrichtung angeordneten Trennwänden (7a, 7b) in Form eines Labyrinths zum Einleiten des Flüssigkeitsstromes in eine mäanderförmige, gleichförmige Strömung anschließt, daß der Ausgang (7e) des Labyrinths derart zum Beckenrand (1a) gerichtet in einen etwa kreis- oder ellipsenförmig ausgebildeten Abscheidebereich (4) übergeht, daß sich eine in nur einer Richtung (10) spiralförmige Bewegung des Flüssigkeitsstromes um die Zuflußöffnung (5c) des Auslaufkastens (5) ergibt, und daß der Strömungsquerschnitt vom Einlauf (2) über das Labyrinth, den Abscheide bereich (4) bis in die zulauföffnung (5c) des Ablaufkastens (4) weitgehend gleichförmig aus gebildet und daß das Innere des Abscheidebereiches (4) im wesentlichen frei von die spiralförmige Bewegung störenden Teilen ist.

2. Abscheider nach Anspruch 1,
dadurch gekennzeichnet, daß am Einlaufkasten (2) eine den Flüssigkeitsstrom seitwärts ableitende Leitnase (3a) angeordnet ist.

3. Abscheider nach Anspruch 1 oder 2,
dadurch gekennzeichnet, daß die Trennwandanordnung (7) aus mindestens zwei bis zum Beckenboden (1b) reichenden Trennwänden (7a, 7b) besteht, von denen jeweils entgegengesetzte Seitenkanten zum Beckenrand (1a) auf gegenüberliegenden Seiten hin abschließen.

4. Abscheider nach Anspruch 3,
dadurch gekennzeichnet, daß die Trennwände (7a, 7b) der Trennwandanordnung (7) durch Verbindungsmittel (7c) zu einer Einheit miteinander verbunden sind und daß die zum Beckenrand (1a) abschließenden Seitenkanten in U-förmige Halterungsschienen (8) eingeschoben sind, die am Beckenrand (1a) befestigt sind.

5. Abscheider nach einem der vorstehenden Ansprüche,
dadurch gekennzeichnet, daß der Abscheider ein Koaleszenzabscheider ist und daß ein zylindrisch geformter Filterkörper (9) im Bereich der Zuflußöffnung (5c) des Auslaufkastens (5) auf der Sockelplatte (5b) gehaltert ist.

6. Abscheider nach einem der vorstehenden Ansprüche,
dadurch gekennzeichnet, daß die Trennwände (7a, 7b) der Trennwandanordnung (7) aus Edelstahlblechen bestehen.

7. Abscheider nach einem der Ansprüche 4 bis 6,
dadurch gekennzeichnet, daß die Trennwände (7a, 7b) der Trennwandanordnung (7) unter Verwendung von Distanzstücken (7c) miteinander verschraubt sind.

8. Abscheider nach einem der Ansprüche 1-7, bei dem das Becken als aufrecht stehender Zylinder ausgebildet ist,
dadurch gekennzeichnet, daß der Auslaufkasten (5) im oberen und mittleren Bereich eine dem Einlauf (2) und der Trennwandanordnung (7) gegenüberliegende glatte Abschlußwand (5a) aufweist, die etwa in der Form einer Kreissehne im Querschnitt des zylindrischen Beckens (1) ausgebildet ist.

9. Abscheider nach einem der Ansprüche 1-7,
dadurch gekennzeichnet, daß das Becken (1) als aufrecht stehender Quader mit längeren Längswänden (1c) und kürzeren Breitenwänden (1d) der Grundfläche (Beckenboden 1b) ausgebildet ist und daß der Einlauf (2) und der Auslaufkasten an den sich gegenüberliegenden Breitenwänden (1d) angeordnet sind.

10. Abscheider nach Anspruch 9,
dadurch gekennzeichnet, daß der Auslaufkasten (5) im oberen und unteren Bereich eine dem Einlauf (2) und der Trennwandanordnung (7) gegenüberliegende glatte Abschlußwand (5a) aufweist, die parallel zur Breitenwand (1d) verläuft und mit zum Abscheideraum (4) geneigten Seitenwänden (5d) zur Strömungsverbesserung versehen ist.

11. Abscheider nach einem der vorstehenden Ansprüche,
dadurch gekennzeichnet, daß die Trennwände (7a, 7b, 7c) der Trennwandanordnung (7) in ihrem am Beckenrand liegenden Bereich mit unter 45° verlaufenden Seitenwänden (5e) zur Strömungsverbesserung versehen sind.

## Claims

1. A separator for separating mixtures of liquids, especially for separating light liquids of water, consisting of a basin having an inlet (2), from which the flow of liquid is introduced downwardly directed from the basin edge, having an adjoining separating region (4), in which the flow of liquid is deflected by a vertical partition arrangement, and having an outlet box (5) leading to the clarified water outlet, which box is in communication with the separation region (4) via an inflow aperture (5c) in a lower base plate (5b),
**characterised in that** the inlet is constructed as an inlet (2) directing the flow of liquid downwardly and to one side, to which is connected a partition arrangement (7) having partitions (7a, 7b) in staggered relationship to one another and disposed at right angles to the inlet direction in the form of a labyrinth for introducing the flow of liquid into a meandering uniform stream,
**in that** the outlet (7e) of the labyrinth passes directed to the basin edge (1a) into a roughly circularly or elliptically constructed separation region (4) in such a manner that a spiral-shaped movement of the flow of liquid in one direction (10) only is produced around the inflow aperture (5c) of the outlet box (5),
**and in that** the cross section of flow from the inlet (2) via the labyrinth and the separation region into the inflow aperture (5c) of the outlet box (5) has a largely uniform construction,
**and in that** the interior of the separation region (4) is substantially free from parts interfering with the spiral-shaped movement.

2. A separator according to Claim 1,
**characterised in that** a guiding lug (3a) laterally deflecting the flow of liquid is disposed on the inlet box (2).

3. A separator according to Claim 1 or 2,
**characterised in that** the partition arrangement (7) consists of at least two partitions (7a, 7b) extending to the basin floor (1b), of which opposite side edges in each case are attached to the basin edge (1a) on opposite sides.

4. A separator according to Claim 3,
**characterised in that** the partitions (7a, 7b) of the partition arrangement (7) are connected to one another by connection means (7c) to form a unit,
**and in that** the side edges connected to the basin edge (1a) are inserted into U-shaped mounting rails (8) which are fixed to the basin edge (1a).

5. A separator according to one of the preceding Claims,
**characterised in that** the separator is a coalescence separator,
**and in that** a cylindrically shaped filter body (9) is mounted in the region of the inflow aperture (5c) of the outlet box (5) on the base plate (5b).

6. A separator according to one of the preceding Claims,
**characterised in that** the partitions (7a, 7b) of the partition arrangement (7) are made from special steel sheets.

7. A separator according to one of Claims 4 to 6,
**characterised in that** the partitions (7a, 7b) of the partition arrangement (7) are screwed to one another by using spacers (7c).

8. A separator according to one of Claims 1-7, in which the basin is constructed as an upright cylinder,
**characterised in that** in the upper and central region the outlet box (5) comprises a smooth end wall (5a) lying opposite the inlet (2) and the partition arrangement (7), which is constructed roughly in the shape of a chord in the cross section of the cylindrical basin (1).

9. A separator according to one of Claims 1 - 7,
**characterised in that** the basin (1) is constructed as a vertically upright cuboid having longer longitudinal walls (1c) and shorter transverse walls (1d) of the base (basin floor 1b), **and in that** the inlet (2) and the outlet box are disposed at the opposite transverse walls (1d).

10. A separator according to Claim 9,
**characterised in that** in the upper and lower region the outlet box (5) comprises a smooth end wall (5a) opposite the inlet (2) and the partition arrangement (7), which extends parallel to the transverse wall (1d) and is provided with side walls (5d) inclined to the separator chamber (4) to improve the flow.

11. A separator according to one of the preceding Claims,
**characterised in that** the partitions (7a, 7b, 7c) of the partition arrangement (7) are provided in their region lying at the basin edge with side walls (5e) extending at 45° to improve the flow.

## Revendications

1. Séparateur pour séparer des mélanges de liquides, en particulier pour séparer des liquides légers à base d'eau, comprenant un bassin avec une entrée (2), par laquelle le flux de liquide est introduit depuis le rebord du bassin en descendant, avec une zone de séparation (4) consécutive, dans laquelle le flux de liquide est dévié par un dispositif à paroi de séparation disposée verticalement, et avec un bac de sortie (5) aboutissant à un écoulement d'eau clarifiée, relié par une ouverture d'arrivée (5c) dans une plaque-socle (5b) inférieure à la zone de séparation (4), caractérisé en ce que l'entrée est conçue comme une entrée (2) guidant le flux de liquide vers le bas et vers un côté, et est suivie d'un dispositif (7) avec des parois de séparation (7a, 7b), décalées entre elles et disposées transversalement au sens d'entrée, formant un labyrinthe pour l'introduction du flux de liquide dans un écoulement régulier et en forme de méandre, en ce que la sortie (7e) du labyrinthe fait place à une zone de séparation (4) de conception à peu près circulaire ou elliptique, orientée par rapport au bord du bassin (1a) de telle façon qu'on obtienne un mouvement, en spirale dans une seule direction (10), du flux de liquide autour de l'ouverture d'arrivée (5c) du bac de sortie (5), et en ce que la section d'écoulement allant de l'entrée (2), passant par le labyrinthe, la zone de décantation (4), et allant jusqu'à l'ouverture d'arrivée (5c) du bac de sortie (5), a une conception approximativement régulière et en ce que l'intérieur de la zone de séparation (4) est sensiblement exempte de pièces perturbant le mouvement en spirale.

2. Séparateur selon la revendication 1, caractérisé en ce qu'un ergot de guidage (3a) déviant le flux de liquide sur le côté est disposé sur le bac d'entrée (2).

3. Séparateur selon la revendication 1 ou 2, caractérisé en ce que le dispositif à parois de séparation (7) comprend au moins deux parois de séparation (7a, 7b) allant jusqu'au fond du bassin (1b), dont les bords latéraux respectivement opposés se terminent au bord du bassin (1a) sur des côtés se faisant face.

4. Séparateur selon la revendication 3, caractérisé en ce que les parois de séparation (7a, 7b) du dispositif à parois de séparation (7) sont reliées entre elles par des moyens de liaison (7c) pour former une unité et en ce que les bords latéraux se terminant au bord du bassin (1a), sont rentrés dans des rails de fixation (8) en forme de U, qui sont fixés sur le bord du bassin (1a).

5. Séparateur selon l'une quelconque des revendications précédentes, caractérisé en ce que le séparateur est un séparateur à coalescence et en ce qu'un corps filtrant (9) de forme cylindrique est logé dans la zone de l'ouverture d'arrivée (5c) du bac de sortie (5) sur la plaque-socle (5b).

6. Séparateur selon l'une des revendications précédentes, caractérisé en ce que les parois de séparation (7a, 7b) du dispositif à parois de séparation (7) sont à base de tôles d'acier spécial.

7. Séparateur selon l'une des revendications 4 à 6, caractérisé en ce que les parois de séparation (7a, 7b) du dispositif à parois de séparation (7) sont vissées entre elles en utilisant des pièces d'écartement (7c).

8. Séparateur selon l'une des revendications 1 à 7, dans lequel le bassin est conçu comme un cylindre vertical, caractérisé en ce que le bac de sortie (5) présente dans la zone supérieure et la zone centrale une paroi terminale (5a) lisse et faisant face à l'entrée (2) et au dispositif à paroi de séparation (7), laquelle paroi se présente par exemple sous la forme d'une corde de cercle dans la section transversale du bassin (1) cylindrique.

9. Séparateur selon l'une des revendications 1 à 7, caractérisé en ce que le bassin (1) est conçu comme un parallélépipède vertical avec des parois longitudinales (1c) plus longues et des parois de largeur (1d) plus courtes de la surface de base (fond du bassin 1b) et en ce que l'entrée (2) et le bac de sortie sont disposés sur les parois de largeur (1d) se faisant face.

10. Séparateur selon la revendication 9, caractérisé en ce que le bac de sortie (5) présente dans la zone supérieure et la zone inférieure une paroi terminale (5a) lisse et faisant face à l'entrée (2) et au dispositif à paroi de séparation (7), laquelle paroi est parallèle à la paroi de largeur (1d) et est pourvu de parois latérales (5d) inclinées par rapport au compartiment de séparation (4) pour l'optimisation de l'écoulement.

11. Séparateur selon l'une des revendications précédentes, caractérisé en ce que les parois de séparation (7a, 7b, 7c) du dispositif à parois de séparation (7) sont pourvues dans leur zone située sur le bord du bassin de parois latérales (5e) inclinées à 45° pour l'optimisation de l'écoulement.
